# EUROPEAN PATENT SPECIFICATION

(11) **EP 3 875 812 B1**
(45) Date of publication and mention of the grant of the patent: **11.12.2024**
(21) Application number: 20161183.7
(22) Date of filing: 05.03.2020
(51) Int. Cl.: F16K 1/44, F01D 17/14, F16K 11/20

(54) **DOUBLE SEATED VALVE ARRANGEMENT FOR FLUID POWER EQUIPMENT**
DOPPELSITZVENTILANORDNUNG FÜR FLUIDTECHNISCHE ANLAGEN
AGENCEMENT DE SOUPAPE À DOUBLE SIÈGE POUR UN ÉQUIPEMENT D'ALIMENTATION EN FLUIDE

(43) Date of publication of application: 08.09.2021
(73) Proprietor: Siemens Energy Global GmbH & Co. KG, 81739 München (DE)
(72) Inventor: BAMRAH, Devinder Singh, 390024 Vadodara, Gujarath (IN); KAKAR, Sukesh, 121004 Faridabad (IN); NAYAK, Akhil, 581304 Karwar, Karnataka (IN); PANCHAL, Ashishkumar, 390006 Vadodara, Gujarath (IN)
(74) Representative: Patentanwaltskanzlei WILHELM & BECK

(56) References cited:
- CN-U- 203 809 730
- DE-C- 192 218
- GB-A- 389 912
- US-A1- 2013 340 853
- US-A1- 2014 053 928

## Description

The present invention relates to a double seated valve arrangement for fluid power equipment, particularly, a steam turbine, see claim 1. Moreover, the present invention relates to a double seated valve arrangement for fluid power equipment that provides a mutually independent actuation of control valves that control flow of the fluid, such as, steam through the steam turbine.

Fluid power equipment, such as, steam turbines employed in power plants, for example, thermoelectric power plants, nuclear power plants, or the like, typically employ valve arrangements, in order to regulate flow of steam according to load changes or to stop the flow of steam altogether. Such valve arrangements typically constitute single seated valve arrangements and double seated valve arrangements. A single seated valve arrangement, typically, employs one or more actuators and these are required to be operated at high pressures for circulating pressurized fluid such as oil through the actuators. However, the single seated valve arrangement involves complex piping design and high oil pressure hydraulic operation, and is therefore, not only cumbersome in construction but also a costly arrangement.

A double seated valve arrangement typically supports regulation of large volumes of fluid at a comparatively lower actuating force than the single seated valve arrangement thereby, enabling hydraulic actuation at low oil pressures. The double seated valve arrangement conventionally involves a pair of valve discs mutually separated from one another by a predefined distance, and designed to rest against a pair of valve seats during shutoff operation. However, in practicality, manufacturing of a valve arrangement typically involves faults that result in failure to achieve the desired precision, due to which positioning of valve seats within a valve arrangement is such that the valve discs fail to simultaneously rest on both the valve seats. Moreover, the valve discs fail to completely rest against the valve seats, thereby failing to provide a secure sealing at, at least one of the valve seats, which further results in an unwanted leakage of the steam leading to an uncontrolled steam turbine operation. However, leakage of the steam may also occur due to some other constructional features of a double seated valve arrangement.

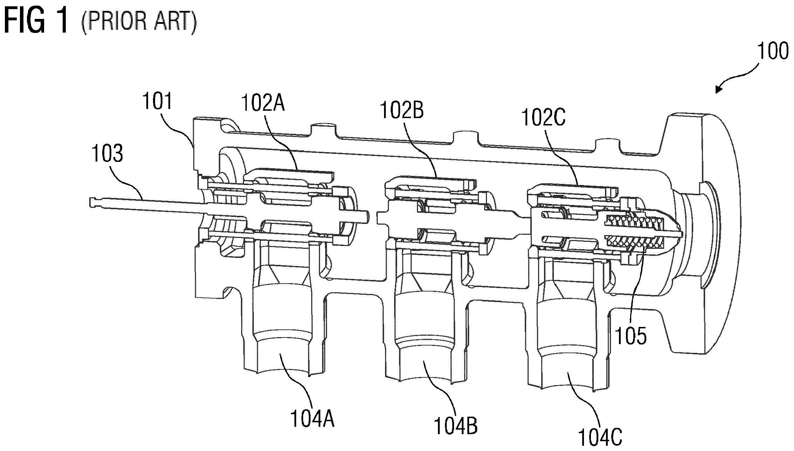

FIG 1 illustrates a sectional perspective view of a double seated valve arrangement 100 for a steam turbine (not shown), according to state of the art. Typically, such arrangement has a housing 101 having therein two or three control valves 102A, 102B and 102C, all of which have a combined actuation mechanism including a spindle 103 and control valve springs 105, allowing the steam to flow out from the outlets 104A, 104B, and 104C when the control valves 102A, 102B, and 102C are in an open position and stop the outflow of steam through the outlets 104A-104C when the valves 102A-102C are in a closed position. The control valve springs 105 of the combined actuation mechanism are in direct contact with steam flowing, thereby affecting stiffness of the spring 105 which in turn leads to an incomplete closure of the control valves 102B and 102C when in closed position. This results in steam leakage which makes the steam turbine to run-up to certain speed levels which may not be acceptable by end customers.

In addition to the fluid leakage problem, double seated valve actuation arrangement requires higher machining and assembly time due to common actuation provided across valves. Furthermore, accessibility to the valves during servicing and maintenance becomes largely inconvenient. Furthermore, due to combined actuations, the valves must be operated, that is opened, in a sequential manner only resulting in a restricted operability, for example, being usable for inlet steam temperatures in the range of 500-520°C. For higher inlet steam temperatures, a single seated valve arrangement must be used which results in higher costs.

Document GB 389 912 (describing a double seated valve arrangement according to the preamble of claim 1) discloses a valve arrangement, comprising a housing and three control valves 3, 8, 9, at least partially accommodated within the housing and displaceable between a closed position and an open position for controlling flow of a fluid in the fluid power equipment. Furthermore, D1 discloses two or more actuating mechanisms 13, 15, 18; 14, 16, 19; 12, 17, 20, actuating the valves 3, 8, 9 and being in an operable connection with the two or more control valves 3, 8, 9, respectively. Each of the actuating mechanisms 13, 15, 18; 14, 16, 19; 12, 17, 20 is positioned axially perpendicular to a direction of fluid flowing through the housing.

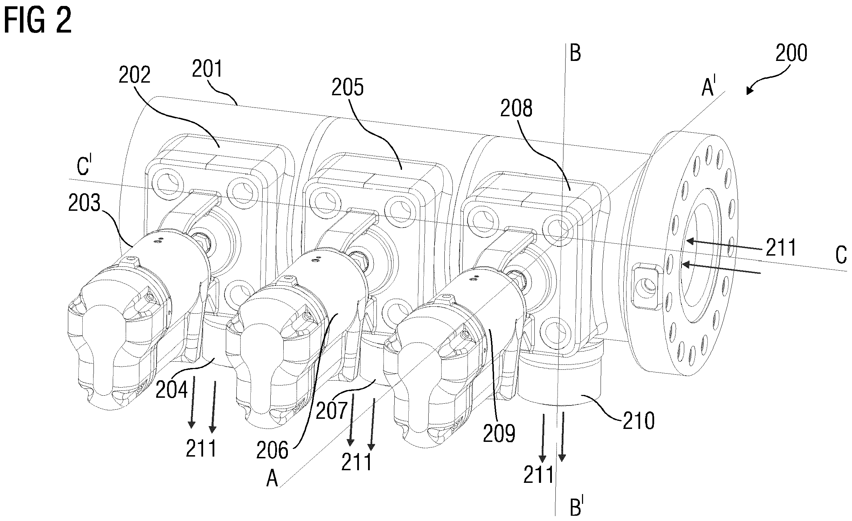

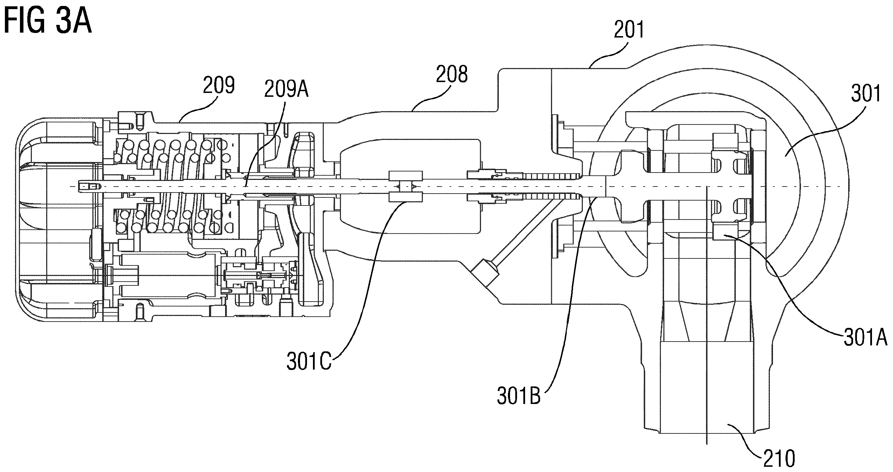

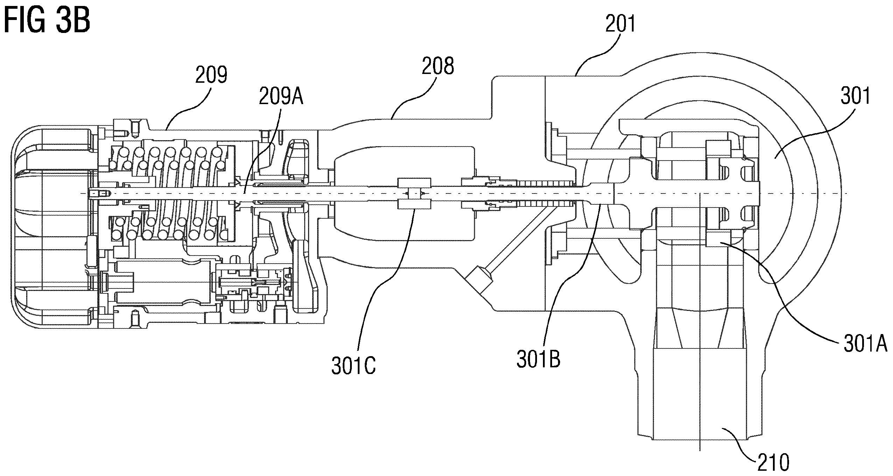

Document US 2013/340853 informs about a mixing valve arrangement 1, comprising a housing 2, and two valves 9, 10, located within a mixing chamber 11, wherein the mixing chamber 11 is located within the housing. Fig. 2 shows the first valve 9 in an open position, whereas fig. 3 shows said valve in a closed position. The arrangement 1 furthermore comprises two actuating mechanisms (valve member assembly 12, 12') for actuating the valves 9, 10 and for being in an operable connection with the valves 9, 10, respectively.

Document US 2014/053928 A1 discloses a double seated valve arrangement 10, comprising two valves 12, 16; 13, 17, accommodated in a housing 11. The valves 12, 16; 13, 17 are arranged in series in direction of flow 24, 22, 23, 25. There are control mechanisms 18, 20 for actuating the valves 12, 16; 13, 17 and by a valve spindle 27 they are in an operable connection with the valves 12, 16; 13, 17, respectively.

Therefore, it is an object of the present invention to provide a double seated valve arrangement to be employed, for example, in a fluid power equipment of the aforementioned kind, wherein the double seated valve arrangement has a housing at least partially accommodating there-within two or more control valves displaceable between a closed position and an open position for controlling flow of a fluid in the fluid power equipment, which is simple to design, is cost effective, and ensures leak-free operation within the fluid power equipment offering a higher degree of freedom while operating the fluid power equipment.

The double seated valve arrangement disclosed herein achieves the aforementioned object, by two or more actuating mechanisms that are in an operable connection with the two or more control valves respectively.

According to a first aspect of the present invention, a double seated valve arrangement as defined in claim 1 is provided. Advantageously, the double seated valve arrangement is provided for a fluid power equipment to control flow of fluid into the fluid power equipment. As used herein, "fluid power equipment" refers to turbomachinery, for example, a steam turbine.

The double seated valve arrangement disclosed herein, includes a housing. As used herein, the term "housing" refers to a valve chest unit of the fluid power equipment. The double seated valve arrangement includes two or more control valves at least partially accommodated within the housing. Advantageously, the double seated valve arrangement has three control valves. According to an embodiment, each of the control valves has a moveable member such as a valve stem which is displaceable between a closed position and an open position for controlling flow of a fluid in the fluid power equipment. The valve stem is displaceable, for example, slidable in a valve cage so as to assume either an open position or a closed position.

The double seated valve arrangement includes two or more actuating mechanisms actuating the two or more control valves. Advantageously, the double seated valve arrangement has three actuating mechanisms. The two or more actuating mechanisms are in an operable connection with the two or more control valves, respectively. As used herein, "actuating mechanism" refers to control mechanism, such as actuators controlling opening and closing of the control valves. The number of actuating mechanisms employed equals the number of control valves present in the double seated valve arrangement. The actuating mechanism includes a spindle coupled via a coupling element to the valve stem of the control valve so as to generate an axial reciprocating movement of the valve stem over the valve cages to open and close the control valve.

According to an embodiment of the present disclosure, the actuating mechanism is a linear actuator, for example, a linear servo motor. According to another embodiment of the present disclosure, the actuating mechanism is a rotary actuator, for example, a rotary servo motor. Advantageously, the actuating mechanism is a pull-type servo motor. A pull-type servo motor allows for insertion of the spindle from same side as the servo motor which results in a lower assembly time, ease of access for repair and maintenance, as well as lower machining requirements.

According to the present invention, the actuating mechanisms are configured to be operable independent of one another. The mutual exclusivity of control operation is achieved by having one actuating mechanism per control vale thereby, allowing independence of actuation. Further according to the present invention, the actuating mechanism is positioned to be generally axially perpendicular to a direction in which the fluid flows in and out of the housing, that is, the valve chest. This allows for minimal contact between the actuating mechanism, that is, the spring in the actuating mechanism and the fluid which allows the springs to retain their stiffness, which in turn improves the overall reliability of the design.

Also disclosed herein is a fluid power equipment, for example, a steam turbine comprising the aforementioned double seated valve arrangement for controlling flow of a fluid flowing therein, having one actuating mechanism per control valve employed. The double seated valve arrangement of the fluid power equipment is configured such that there is minimal contact established between each of the actuating mechanisms and the fluid flowing there-within.

Further preferred embodiments of the present invention are defined in the dependent claims.

The above-mentioned and other features of the invention will nc be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a sectional perspective view of a double seated valve arrangement for a steam turbine according to state of the art.
- FIG 2: illustrates a perspective view of a double seated valve arrangement for a steam turbine, according to the present invention.
- FIGS 3A-3B: illustrate sectional elevation views of actuation mechanism employed for one of the control valves of the double seated valve arrangement shown in FIG 2, during an open position of the control valve and a closed position of the control valve respectively, according to the present invention. Z

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

FIG 2 illustrates a perspective view of a double seated valve arrangement 200 for a steam turbine (not shown), according to the present invention, having steam flowing therein in a direction shown by the flow arrows 211. As illustrated in FIG 2, the double seated valve arrangement 200 comprises a housing 201, that is, a valve body including there-within three valves (not shown) each of which have valve covers 202, 205, and 208. The steam flows out through the outlets 204, 207, and 210 upon operation of respective valves. The valves are in connection with and are operable via actuating mechanisms 203, 206, and 209 respectively. The actuating mechanism 203, 206, and/or 209 includes a servomotor, for example, a pull type servomotor. Each actuating mechanisms 209 is positioned such that an axis A-A' passing axially there-through intersects nearly orthogonally with an axis C-C' passing axially through the housing 201 representing direction of fluid inflow and with an axis B-B' passing through the corresponding control valve and its outlet 210 representing direction of fluid outflow. This arrangement of the actuating mechanisms helps establish near zero contact of the control springs therein with the fluid flowing.

FIGS 3A-3B illustrate sectional elevation views of actuation mechanism 209 employed for one of the control valves 301 of the double seated valve arrangement 200 shown in FIG 2, during an open position of the control valve 301 and a closed position of the control valve 301 respectively in FIG 3A and FIG 3B, according to the present disclosure. The servomotor 209 upon receiving a control pulse actuates a spindle 209A which in turn is connected to a valve stem 301B of the control valve 301, via a coupling 301C. The movement is thus transferred from the spindle 209A to the valve stem 301B thereby, aligning or misaligning itself with valve cage 301A. As shown in FIG 3A, the valve stem 301B is in alignment with the valve cage 301A thereby, putting the control valve 301 in an open position. As shown in FIG 3B, the valve stem 301B is not in alignment with the valve cage 301A thereby, putting the control valve 301 in a closed position.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims.

### List of Reference Numerals

- 100: double seated valve arrangement (state of the art)
- 101: housing of the double seated valve arrangement (state of the art)
- 102A-102C: control valves of the double seated valve arrangement (state of the art)
- 103: spindle of the double seated valve arrangement (state of the art)
- 104A-104C: outlets of the double seated valve arrangement (state of the art)
- 105: control valve springs of the double seated valve arrangement (state of the art)
- 200: double seated valve arrangement (according to present disclosure)
- 201: housing
- 202, 205, 208: valve covers
- 203, 206, 209: actuating mechanisms
- 209A: spindle
- 204, 207, 210: outlets
- 211: flow arrows for steam flow inside the housing
- 301: control valve positioned inside valve cover 208
- 301A: valve cage
- 301B: valve stem
- 301C: coupling

## Claims

1. A double seated valve arrangement (200) for a fluid power equipment, having:
- a housing (201);
- two or more control valves (301) at least partially accommodated within the housing (201) and displaceable between a closed position and an open position for controlling flow of a fluid in the fluid power equipment;
- two or more actuating mechanisms (203, 206, or 209) actuating the two or more control valves (301), wherein the two or more actuating mechanisms (203, 206, 209) are in an operable connection with the two or more control valves (301), respectively,
the double seated valve arrangement being **characterised in that**:
each of the two or more actuating mechanisms (203, 206, 209) are configured to be operable independent of one another,
and **in that**
each of the actuating mechanisms (203, 206, 209) is positioned generally axially perpendicular to a direction in which the fluid flows in (211) the housing (201) and a direction in which the fluid flows out (210) of the housing (201), and wherein the direction of fluid flowing in (211) the housing (201) is positioned generally axially perpendicular to the direction of fluid flowing out (210) of the housing (201).

2. The double seated valve arrangement (200) according to claim 1, wherein each of the two or more actuating mechanisms (203, 206, 209) is one of a linear actuator and a rotary actuator.

3. The double seated valve arrangement (200) according to any one of the previous claims, wherein the fluid power equipment refers in use to turbomachinery.

4. A fluid power equipment, comprising a double seated valve arrangement (200) according to any one of the claims 1-3 for controlling flow of a fluid flowing therein.

5. The fluid power equipment according to claim 4, wherein the double seated valve arrangement (200) is configured to establish minimal contact between each of the two or more actuating mechanisms (203, 206, 209) and the fluid flowing there-within.

6. The fluid power equipment according to claim 4 or 5, wherein the fluid power equipment is a steam turbine.

## Patentansprüche

1. Doppelsitzventilanordnung (200) für eine fluidtechnische Anlage; Folgendes aufweisend:
- ein Gehäuse (201);
- zwei oder mehrere Regelventile (301), die zumindest teilweise innerhalb des Gehäuses (201) aufgenommen und zwischen einer geschlossenen Stellung und einer geöffneten Stellung zum Steuern der Strömung eines Fluids in der fluidtechnischen Anlage verschiebbar sind;
- zwei oder mehrere Betätigungsmechanismen (203, 206 oder 209), welche die zwei oder mehreren Regelventile (301) betätigen, wobei die zwei oder mehreren Betätigungsmechanismen (203, 206, 209) jeweils mit den zwei oder mehreren Regelventilen (301) wirkverbunden sind,
wobei die Doppelsitzventilanordnung **dadurch gekennzeichnet ist, dass**:
jeder der zwei oder mehreren Betätigungsmechanismen (203, 206, 209) dazu ausgelegt ist, unabhängig voneinander funktionsfähig zu sein,
und dass jeder der Betätigungsmechanismen (203, 206, 209) im Allgemeinen axial senkrecht zu einer Richtung, in welche das Fluid im (211) Gehäuse (201) strömt, und einer Richtung, in welche das Fluid aus (210) dem Gehäuse (201) heraus strömt, positioniert ist und wobei die Richtung des in (211) das Gehäuse (201) strömenden Fluids im Allgemeinen axial senkrecht zur Richtung des aus (210) dem Gehäuse (201) heraus strömenden Fluids positioniert ist.

2. Doppelsitzventilanordnung (200) nach Anspruch 1, wobei jeder der zwei oder mehreren Betätigungsmechanismen (203, 206, 209) ein Linearstellglied oder ein Drehstellglied ist.

3. Doppelsitzventilanordnung (200) nach einem der vorstehenden Ansprüche, wobei sich die fluidtechnische Anlage bei der Verwendung auf Strömungsmaschinen bezieht.

4. Fluidtechnische Anlage, umfassend eine Doppelsitzventilanordnung (200) nach einem der Ansprüche 1-3 zum Steuern der Strömung eines darin strömenden Fluids.

5. Fluidtechnische Anlage nach Anspruch 4, wobei die Doppelsitzventilanordnung (200) dazu ausgelegt ist, minimalen Kontakt zwischen jedem der zwei oder mehreren Betätigungsmechanismen (203, 206, 209) und dem darin strömenden Fluid herzustellen.

6. Fluidtechnische Anlage nach Anspruch 4 oder 5, wobei die fluidtechnische Anlage eine Dampfturbine ist.

## Revendications

1. Agencement de soupape à double siège (200) pour un équipement d'alimentation en fluide, ayant :
- un boîtier (201) ;
- deux ou plusieurs vannes de régulation (301) au moins partiellement accueillies à l'intérieur du boîtier (201) et pouvant être déplacées entre une position fermée et une position ouverte pour commander l'écoulement d'un fluide dans l'équipement d'alimentation en fluide ;
- deux ou plusieurs mécanismes d'actionnement (203, 206, ou 209) actionnant les deux ou plusieurs vannes de régulation (301), dans lequel les deux ou plusieurs mécanismes d'actionnement (203, 206, 209) sont en liaison opérationnelle avec les deux ou plusieurs vannes de régulation (301), respectivement,
l'agencement de soupape à double siège étant **caractérisé en ce que** :
chacun des deux ou plusieurs mécanismes d'actionnement (203, 206, 209) sont configurés pour être opérationnels indépendamment les uns des autres,
et **en ce que** chacun des mécanismes d'actionnement (203, 206, 209) est positionné de manière généralement axialement perpendiculaire à une direction dans laquelle le fluide s'écoule dans (211) le boîtier (201) et une direction dans laquelle le fluide s'écoule hors (210) du boîtier (201), et dans lequel la direction du fluide s'écoulant dans (211) le boîtier (201) est positionnée de manière généralement axialement perpendiculaire à la direction du fluide s'écoulant hors (210) du boîtier (201).

2. Agencement de soupape à double siège (200) selon la revendication 1, dans lequel chacun des deux ou plusieurs mécanismes d'actionnement (203, 206, 209) est l'un d'un actionneur linéaire et d'un actionneur rotatif.

3. Agencement de soupape à double siège (200) selon l'une quelconque des revendications précédentes, dans lequel l'équipement d'alimentation en fluide se rapporte en utilisation à une turbomachine.

4. Équipement d'alimentation en fluide, comprenant un agencement de soupape à double siège (200) selon l'une quelconque des revendications 1 à 3 pour commander l'écoulement d'un fluide s'écoulant à travers celui-ci.

5. Équipement d'alimentation en fluide selon la revendication 4, dans lequel l'agencement de soupape à double siège (200) est configuré pour établir un contact minimal entre chacun des deux ou plusieurs mécanismes d'actionnement (203, 206, 209) et le fluide s'y écoulant.

6. Équipement d'alimentation en fluide selon la revendication 4 ou 5, dans lequel l'équipement d'alimentation en fluide est une turbine à vapeur.
